# EUROPÄISCHE PATENTSCHRIFT

(11) **EP 3 619 442 B1**
(45) Veröffentlichungstag und Bekanntmachung des Hinweises auf die Patenterteilung: **16.09.2020**
(21) Anmeldenummer: 18723439.8
(22) Anmeldetag: 27.04.2018
(51) Int. Cl.: F16D 25/0638

(54) **KUPPLUNGSVORRICHTUNG**
CLUTCH DEVICE
DISPOSITIF DE COUPLAGE

(30) Priorität: 04.05.2017 DE 102017004293
(43) Veröffentlichungstag der Anmeldung: 11.03.2020
(73) Patentinhaber: Daimler AG, 70372 Stuttgart (DE)
(72) Erfinder: SPERRFECHTER, Stefan, 73072 Donzdorf (DE); SCHWEITZER, Juergen, 70794 Filderstadt (DE); BOU ROMANO, Josep,Maria, 71384 Weinstadt (DE); HAERTER, Tobias, 70174 Stuttgart (DE); HAHN, Peter, 70374 Stuttgart (DE); ROMANIAK, Jakub, 70186 Stuttgart (DE); HUBEL, Hannes, 70197 Stuttgart (DE)
(74) Vertreter: JENSEN & SON
(86) Internationale Anmeldenummer: PCT/EP2018/060834
(87) Internationale Veröffentlichungsnummer: WO 2018/202568

(56) Entgegenhaltungen:
- EP-A1- 2 857 707
- EP-A1- 2 902 650
- DE-A1-102014 226 150

## Beschreibung

Die Erfindung betrifft eine Kupplungsvorrichtung.

Aus der DE 10 2011 113 278 B4 ist bereits eine Kupplungsvorrichtung zur Betätigung einer Kupplung eines Kraftfahrzeuggetriebes, mit einer hydraulischen Betätigungsvorrichtung, die zur Kupplungsbetätigung vorgesehen ist und dazu zumindest ein Gehäuseelement und einen in dem Gehäuseelement gelagerten Kupplungskolben aufweist, der zwischen einer Ruhestellung und einer Betätigungsstellung verschiebbar in dem Gehäuseelement gelagert ist, wobei zwischen dem Gehäuseelement und dem Kupplungskolben ein Druckraum angeordnet ist, durch dessen Beaufschlagung mit einem Betätigungsbetriebsmitteldruck der Kupplungskolben zumindest von der Ruhestellung in die Betätigungsstellung verfahren werden kann, und mit einem Verriegelungsmechanismus, der den Kupplungskolben in der Betätigungsstellung mechanisch verriegelt und dazu wenigstens ein beweglich gelagertes Halteelement aufweist, das dazu vorgesehen ist, durch einen Betätigungsbetriebsmitteldruck in seine Verriegelstellung gebracht zu werden, bekannt.

Ferner sind auch aus der EP 2 902 650 A1 und aus der gattungsgemäßen EP 2 857 707 A1 Kupplungsvorrichtungen mit Verriegelungsmechanismen bekannt, wobei zudem die Verriegelungsmechanismen Verriegelungselemente aufweisen, mittels derer ein Halteelement zumindest in einem teilweise geöffneten Zustand der Kupplung deaktiviert werden kann.

Der Erfindung liegt insbesondere die Aufgabe zugrunde, eine besonders einfach aufgebaute und zugleich sicher verriegelnde und entriegelnde Kupplungsvorrichtung zur Verriegelung einer Kupplung in einem betätigten Zustand bereitzustellen. Sie wird durch eine erfindungsgemäße Ausgestaltung entsprechend dem Anspruch 1 gelöst. Weiterbildungen der Erfindung ergeben sich aus den abhängigen Ansprüchen.

Die Erfindung geht aus von einer Kupplungsvorrichtung zur Betätigung einer Kupplung eines Kraftfahrzeuggetriebes, mit einer hydraulischen Betätigungsvorrichtung, die zur Kupplungsbetätigung vorgesehen ist und dazu zumindest ein Gehäuseelement und einen in dem Gehäuseelement gelagerten Kupplungskolben aufweist, der zwischen einer Ruhestellung und einer Betätigungsstellung verschiebbar in dem Gehäuseelement gelagert ist, wobei zwischen dem Gehäuseelement und dem Kupplungskolben ein Druckraum angeordnet ist, durch dessen Beaufschlagung mit einem Betätigungsbetriebsmitteldruck der Kupplungskolben zumindest von der Ruhestellung in die Betätigungsstellung verfahren werden kann, und mit einem Verriegelungsmechanismus, der den Kupplungskolben in der Betätigungsstellung mechanisch verriegelt und dazu wenigstens ein beweglich gelagertes Halteelement aufweist, das dazu vorgesehen ist, durch einen Betätigungsbetriebsmitteldruck in eine Verriegelstellung zur Verriegelung des Kupplungskolbens gebracht zu werden.
Dabei ist das beweglich gelagerte Halteelement derart ausgebildet, dass es durch Beaufschlagung der Vorrichtung mit dem Betätigungsbetriebsmitteldruck wieder aus seiner Verriegelstellung gebracht werden kann.

Ferner wird davon ausgegangen, dass der Verriegelungsmechanismus ein sowohl zu dem Gehäuseelement als auch zu dem Kupplungskolben axial verschiebbar gelagertes Verriegelungselement aufweist, das zumindest dazu vorgesehen ist, das Halteelement zumindest in einem teilweise geöffneten Zustand der Kupplung zu deaktivieren.

Unter einer Deaktivierung des Halteelementes ist zu verstehen, dass das Halteelement in dem deaktivierten Zustand eine Stellung einnimmt, bei der es den Kupplungskolben nicht in seiner Betätigungsstellung verriegelt.

Unter einer "Kupplung" soll dabei insbesondere ein Maschinenelement zur drehfesten Verbindung zweier drehbar zueinander gelagerter Elemente, wie beispielsweise von zwei Wellen oder einer Welle und einem feststehenden Gehäuse, verstanden werden, wobei in einem geöffneten Zustand der Kupplung die beiden Elemente zueinander drehbar und in einem geschlossenen Zustand der Kupplung drehfest miteinander verbunden sind. Die drehfeste Verbindung wird dabei vorzugsweise durch eine kraftschlüssige und/oder formschlüssige Kopplung hergestellt. Die Kupplung ist vorzugsweise als eine Lamellenkupplung ausgebildet und weist zwei drehbar zueinander gelagerte Lamellenpakete auf, die vorzugsweise jeweils mehrere Lamellen aufweisen, wobei die Lamellen der unterschiedlichen Lamellenpakete in einem geschlossenen Zustand der Kupplung gegeneinander gepresst werden und so über eine Reibschlussverbindung miteinander gekoppelt werden. In einem geschlossenen Zustand der Kupplung kann ein Moment zwischen den Lamellenpaketen übertragen werden. Unter einem "Kraftfahrzeuggetriebe" soll dabei insbesondere ein Getriebe verstanden werden, das in einem Kraftfahrzeug verbaut ist und dazu vorgesehen ist, wenigstens ein Antriebsmoment von wenigstens einer Antriebsmaschine an eine Antriebsachse zu leiten und dabei ein Moment und eine Drehzahl einzustellen. Das Kraftfahrzeuggetriebe ist dabei vorzugsweise mit Planetenradsätzen und/ oder Stirnradstufen ausgebildet. Unter einer "hydraulischen Betätigungsvorrichtung" soll dabei insbesondere eine Betätigungsvorrichtung verstanden werden, die mittels eines Hydraulikdrucks betätigt wird und insbesondere einen Hydraulikdruck in eine Betätigungskraft umwandelt. Unter einer "Kupplungsbetätigung" soll dabei insbesondere eine Überführung der Kupplung von einem Zustand in einen anderen Zustand verstanden werden, insbesondere eine Überführung der Kupplung von einem geöffneten Zustand in einen geschlossenen Zustand oder von einem geschlossenen Zustand in einen geöffneten Zustand. Unter einem "Gehäuseelement" soll dabei insbesondere ein Element verstanden werden, das ein Bauteil, wie insbesondere die hydraulische Betätigungsvorrichtung, zumindest teilweise nach außen begrenzt. Unter einem "Kupplungskolben" soll dabei insbesondere ein axial verschiebbares Element verstanden werden, das insbesondere in dem Gehäuseelement gelagert ist und das durch seine axiale Verschiebung dazu vorgesehen ist, eine Betätigungskraft auf die Kupplung zu erzeugen. Dabei bildet der Kupplungskolben zusammen mit dem Gehäuseelement einen Druckraum aus, der über einen Betriebsmittelkanal mit einem Betriebsmittel gefüllt und so mit einem Betriebsmitteldruck beaufschlagt werden kann, wobei der Kupplungskolben durch den Betriebsmitteldruck in dem Druckraum axial verschoben wird und die Betätigungskraft auf die Kupplung aufbaut. Unter einer "Ruhestellung" soll dabei insbesondere eine Stellung des Kupplungskolbens verstanden werden, in der der Kupplungskolben keine Betätigungskraft auf die Kupplung ausübt und der Druckraum, den der Kupplungskolben mit dem Gehäuseelement ausbildet, insbesondere druckfrei ist. Unter einer "Betätigungsstellung" soll dabei insbesondere eine Stellung des Kupplungskolbens verstanden werden, in der der Kupplungskolben aus seiner Ruhestellung heraus in Richtung der Kupplung axial verschoben ist und so eine Betätigungskraft auf die Kupplung aufbaut. Zur Erreichung der Betätigungsstellung ist der Druckraum, den der Kupplungskolben mit dem Gehäuseelement ausbildet, mit einem ausreichend großen Betriebsmitteldruck beaufschlagt. Unter einem "Verriegelungsmechanismus" soll dabei insbesondere ein Mechanismus verstanden werden, der die hydraulische Betätigungsvorrichtung zumindest in einer Betätigungsstellung verriegelt, sodass ein Betriebsmitteldruck in dem Druckraum abgebaut werden kann und die Betätigungsvorrichtung die Kupplung dabei immer noch betätigt, insbesondere in einem geschlossenen Zustand hält. Unter "mechanisch verriegeln" soll dabei insbesondere verstanden werden, dass eine Verriegelung über einen Formschluss hergestellt wird. Unter dem Halteelement soll dabei insbesondere ein Element verstanden werden, das für die mechanische Verriegelung der Betätigungsvorrichtung vorgesehen ist und dazu den Betätigungskolben zumindest in einem Zustand in der Betätigungsstellung hält, wobei das Halteelement dabei vorzugsweise eine Formschlussverbindung mit dem Gehäuseelement herstellt. Unter "beweglich gelagert" soll dabei insbesondere verstanden werden, dass das Halteelement so gelagert ist, dass es wenigstens einen Freiheitsgrad aufweist und entlang einer Bewegungsbahn zwischen zumindest zwei Stellungen bewegt werden kann.

Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Dadurch kann der Verriegelungsmechanismus die Betätigungsvorrichtung besonders vorteilhaft durch Beaufschlagung mit einem Betätigungsbetriebsmitteldruck verriegeln und freigeben und es ist insbesondere nicht nötig, den Druckraum zum Verriegeln oder Entriegeln mit einem Betriebsmittelüberdruck, der größer ist als der zum Schließen der Kupplung nötige Betätigungsbetriebsmitteldruck, zu beaufschlagen. Dadurch kann die Kupplungsvorrichtung vorteilhaft effizient ausgebildet werden und Energie kann vorteilhaft eingespart werden, da kein Betriebsmittelüberdruck in dem Druckraum erzeugt werden muss.

Weiter wird vorgeschlagen, dass das beweglich gelagerte Halteelement dazu vorgesehen ist, zur Verriegelung des Kupplungskolbens den Kupplungskolben direkt mit dem Gehäuseelement zu koppeln. Unter "direkt koppeln" soll dabei insbesondere verstanden werden, dass das Halteelement zur Verriegelung der Betätigungsvorrichtung formschlüssig mit dem Kupplungskolben und dem Gehäuse gekoppelt ist und so eine Kraft über das wenigstens eine Halteelement zwischen dem Gehäuse und dem Kupplungskolben übertragen werden kann. Insbesondere kann eine Kraft von dem Kupplungskolben direkt über das wenigstens eine Halteelement an dem Gehäuseelement abgestützt werden und so kann die Kupplung geschlossen gehalten werden. Dadurch kann der Kupplungskolben zur Verriegelung der Betätigungsvorrichtung besonders einfach verriegelt werden.

Erfindungsgemäß wird vorgeschlagen, dass das Verriegelungselement zu dem Gehäuseelement und/oder dem Kupplungskolben drehbar gelagert ist.

Unter einem "Verriegelungselement" soll dabei insbesondere ein Element verstanden werden, das eine Bewegung wenigstens eines Elements, wie insbesondere eine Bewegung des wenigstens einen Halteelements, in zumindest einer Stellung unterbindet und das Element in einer Stellung, insbesondere in einer Verstaustellung, verriegelt. Unter einem "zumindest teilweise geöffneten Zustand der Kupplung" soll dabei insbesondere ein Zustand der Kupplung verstanden werden, in dem die Kupplung nicht komplett geschlossen ist, aber grundsätzlich eine teilweise Übertragung eines Moments über die Kupplung schon möglich ist. Grundsätzlich kann ein zumindest teilweise geöffneter Zustand auch einen komplett geöffneten Zustand der Kupplung beinhalten, in dem kein Moment von der Kupplung übertragen werden kann. Dadurch kann das Halteelement vorteilhaft verriegelt werden, wenn die Kupplung noch nicht geschlossen ist.

Weiterhin wird vorgeschlagen, dass das Verriegelungselement zur Verriegelung des Kupplungskolbens dazu vorgesehen ist, das Halteelement freizugeben. Unter "freigeben" soll dabei insbesondere verstanden werden, dass das Halteelement aus seiner Verstauposition herausbewegt werden kann und in seiner Verriegelstellung in einen formschlüssigen Kontakt mit dem Kupplungskolben gelangen kann, um den Kupplungskolben mechanisch mit dem Gehäuseelement zu verriegeln. Dadurch kann der Verriegelungsmechanismus besonders vorteilhaft ausgebildet werden.

Ferner wird vorgeschlagen, dass das Verriegelungselement als eine Stellhülse ausgebildet ist und an einem Innenumfang in Umfangsrichtung benachbart angeordnete Sperrbereiche und Freigabebereiche aufweist. Unter einem "Sperrbereich" soll dabei insbesondere ein Bereich verstanden werden, in dem das wenigstens eine Halteelement durch einen Formschluss in seine Verstaustellung drückt, wenn das Verriegelungselement in einer entsprechenden Verriegelstellung ist. Unter einem "Freigabebereich" soll dabei insbesondere ein Bereich verstanden werden, der so ausgestaltet ist, dass das wenigstens eine Halteelement durch eine Federkraft in diesen Bereich hereingedrückt werden kann, wenn das Verriegelungselement in einer entsprechenden Freigabestellung angeordnet ist und das wenigstens eine Halteelement dabei deckungsgleich mit dem Freigabebereich angeordnet ist. Dadurch kann das Verriegelungselement zur wahlweisen Verriegelung oder Freigabe des wenigstens einen Halteelements besonderes einfach ausgebildet werden.

Es wird weiter vorgeschlagen, dass das Verriegelungselement über eine Kulissenführung geführt ist, die dazu vorgesehen ist, eine axiale Bewegung des Verriegelungselements in eine Rotation des Verriegelungselements umzusetzen. Dadurch kann das Verriegelungselement besonders einfach zwischen seiner Verriegelstellung und seiner Freigabestellung verstellt werden.

Zudem wird vorgeschlagen, dass die Kulissenführung zumindest eine Führungsnut aufweist, die an einem Außenumfang des Kupplungskolbens angeordnet ist. Dadurch kann die Kulissenführung besonders einfach zur Führung des Kupplungskolbens ausgebildet werden.

Des Weiteren wird vorgeschlagen, dass die Führungsnut eine W-Form aufweist. Darunter, dass die "Führungsnut eine W-Form aufweist", soll dabei insbesondere verstanden werden, dass die Führungsnut in einer Draufsicht eine im Wesentliche W-förmige Führungsbahn bildet. Dadurch kann die Führungsnut besonders vorteilhaft zur Rotation des Verriegelungselements zwischen einer Freigabestellung und zwei Verriegelstellungen ausgebildet werden.

Weiterhin wird vorgeschlagen, dass die Kulissenführung wenigstens einen in die Führungsnut eingreifenden Führungspin aufweist, der ortsfest in dem Kupplungskolben gelagert ist. Dadurch kann der Kupplungskolben besonderes einfach und vorteilhaft über die Kulissenführung mit dem Verriegelungselement gekoppelt werden.

Weitere Vorteile ergeben sich aus der folgenden Figurenbeschreibung. In den Figuren ist ein Ausführungsbeispiel der Erfindung dargestellt. Die Figuren, die Figurenbeschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Dabei zeigen:
- Fig. 1: eine schematische Schnittansicht einer erfindungsgemäßen Kupplungsvorrichtung mit einer Betätigungsvorrichtung, einer zu betätigenden Kupplung und einem Verriegelungsmechanismus,
- Fig. 2: eine schematische Schnittansicht in der Kupplungsvorrichtung in einer Explosionsdarstellung,
- Fig. 3: eine schematische Schnittansicht eines Verriegelungselements des Verriegelungsmechanismus,
- Fig. 4: eine schematische Schnittansicht der Betätigungsvorrichtung und des Verriegelungsmechanismus in einer Ruhestellung,
- Fig. 5: eine schematische Schnittansicht der Betätigungsvorrichtung und des Verriegelungsmechanismus während einer Verstellung der Kupplung,
- Fig. 6: eine schematische Schnittansicht der Betätigungsvorrichtung und des Verriegelungsmechanismus in einer Verriegelstellung der Betätigungsvorrichtung,
- Fig. 7: eine schematische Schnittansicht der Betätigungsvorrichtung und des Verriegelungsmechanismus während einer Rückstellung der Betätigungsvorrichtung von einer Betätigungsstellung in die Ruhestellung und
- Fig. 8: eine schematische Prinzipansicht einer Kulissenführung des Verriegelungsmechanismus.

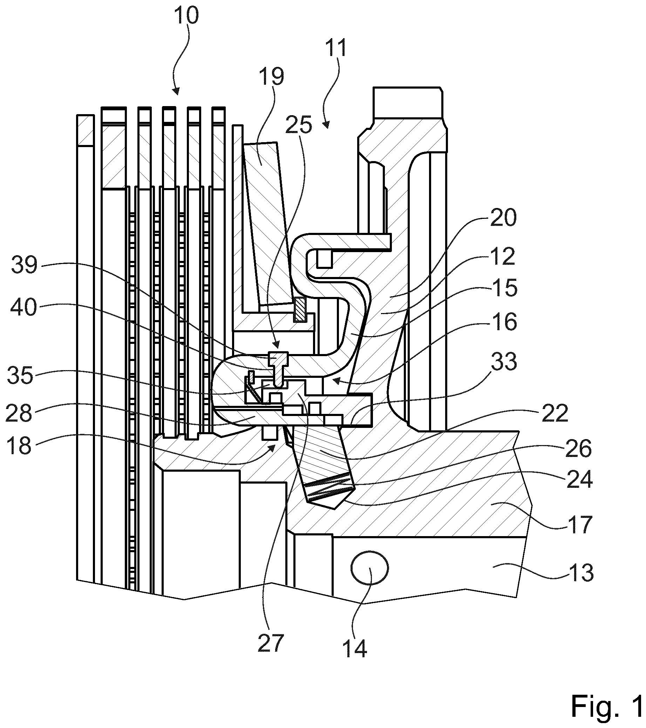

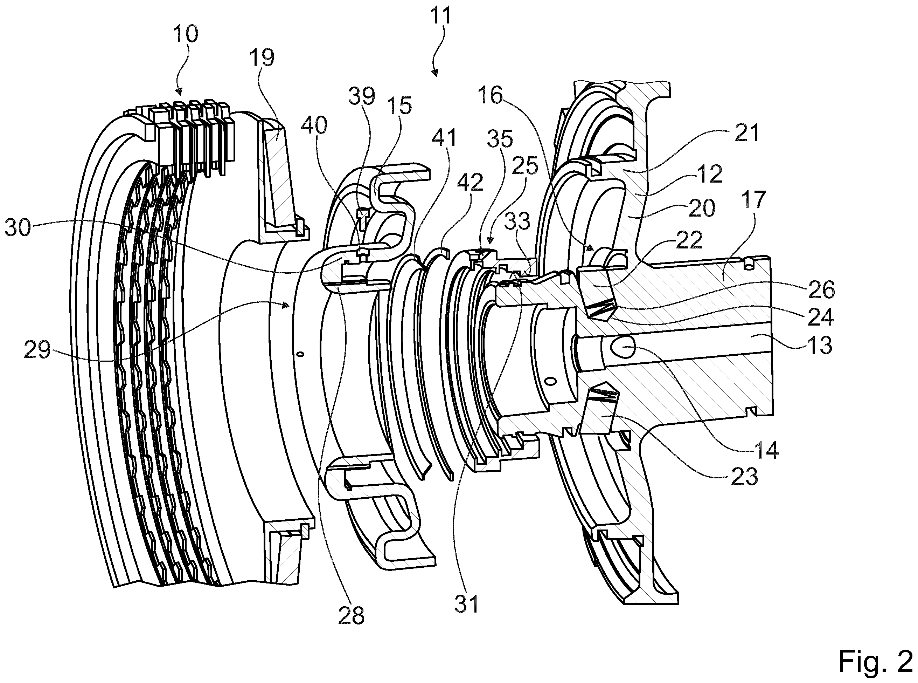

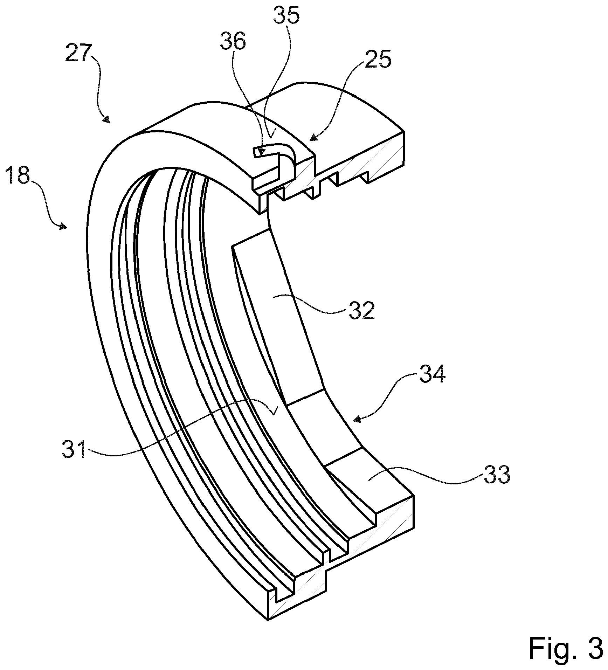

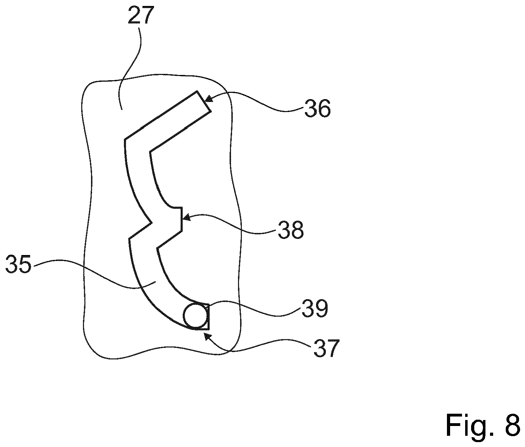

Die Figuren 1 bis 8 zeigen eine erfindungsgemäße Kupplungsvorrichtung. Die Kupplungsvorrichtung ist ein Teil eines Kraftfahrzeuggetriebes, insbesondere eines Kraftfahrzeuggetriebes mit Planetenradsätzen und/ oder Stirnradstufen. Die Kupplungsvorrichtung umfasst eine Kupplung 10. Die Kupplung 10 ist als eine Lamellenkupplung ausgebildet. Die Kupplung 10 ist dazu vorgesehen, zwei in einem geöffneten Zustand der Kupplung 10 drehbar zueinander angeordnete Elemente in einem geschlossenen Zustand drehfest miteinander zu kuppeln, sodass insbesondere ein Moment über die Lamellenkupplung zwischen den beiden Elementen übertragen werden kann. Die Kupplung 10 umfasst ein Lamellenpaket, wobei erste Lamellen mit dem ersten Element und zweite Lamellen mit dem zweiten Element drehfest verbunden sind. Die Kupplung 10 ist hydraulisch betätigbar. Die Kupplung 10 ist dazu vorgesehen, durch Beaufschlagung mit einem Betriebsmitteldruck geschlossen zu werden. In einem mit Druck beaufschlagten Zustand ist die Kupplung 10 geschlossen und ein Moment kann von der Lamellenkupplung übertragen werden. In einem geöffneten Zustand der Kupplung 10, in dem kein Betriebsmitteldruck anliegt, sind die ersten und zweiten Lamellen des Lamellenpaketes der Kupplung 10 voneinander getrennt und es kann von der Kupplung 10 kein Moment übertragen werden.

Die Kupplungsvorrichtung ist zur Betätigung der Kupplung 10 eines Kraftfahrzeuggetriebes vorgesehen. Zur Betätigung der Kupplung 10 weist die Kupplungsvorrichtung eine hydraulische Betätigungsvorrichtung 11 auf. Die hydraulische Betätigungsvorrichtung 11 ist zur Kupplungsbetätigung vorgesehen. Mittels der hydraulischen Betätigungsvorrichtung 11 kann die Kupplung 10 mit einem Betriebsmitteldruck beaufschlagt und dadurch geschlossen bzw. geöffnet werden. In einem geöffneten Zustand der Kupplung 10 ist die hydraulische Betätigungsvorrichtung 11 im Wesentlichen druckfrei. Die hydraulische Betätigungsvorrichtung 11 weist eine Ruhestellung und eine Betätigungsstellung auf. In der Ruhestellung ist die hydraulische Betätigungsvorrichtung 11 im Wesentlichen druckfrei und betätigt die Kupplung 10 nicht. In der Betätigungsstellung betätigt die Betätigungsvorrichtung 11 die Kupplung 10, wodurch diese geschlossen ist/wird. Die hydraulische Betätigungsvorrichtung 11 ist dazu vorgesehen, in der Betätigungsstellung mechanisch verriegelt zu werden, um die Kupplung 10 ohne Anliegen eines Betriebsmitteldrucks geschlossen zu halten. Durch die mechanische Verriegelung der Betätigungsvorrichtung 11 in der Betätigungsstellung kann die Kupplung 10 kraftfrei geschlossen gehalten werden. So muss ein Hydraulikdruck vorteilhaft nicht während einer gesamten Phase, in der die Kupplung 10 geschlossen ist, aufrechterhalten werden. So kann vorteilhaft Energie eingespart werden.

Die Betätigungsvorrichtung 11 weist ein Gehäuseelement 12 auf. Das Gehäuseelement 12 ist mit der Abtriebswelle 17 verdrehfest und axial fest verbunden, es ist einteilig mit einer Abtriebswelle 17 des Kraftfahrzeuggetriebes ausgebildet. Das Gehäuseelement 12 ist ringförmig ausgebildet. Das Gehäuseelement 12 bildet eine Rückwand 20 aus, die das Gehäuseelement 12 rückseitig begrenzt. Die Rückwand 20 ist als Grundkörper eines Zahnrads des Kraftfahrzeuggetriebes ausgebildet.

Das Gehäuseelement 12 bildet eine Wandung 21 aus, die zwischen einem äußeren Umfang der Rückwand 20 und der Abtriebswelle 17 angeordnet ist. Die Wandung 21 erstreckt sich dabei von der Rückwand 20 in Axialrichtung in Richtung der Kupplung 10. Die Abtriebswelle 17 weist in ihrem Inneren konzentrisch einen Betriebsmittelkanal 13 auf. Schräg zu dem Betriebsmittelkanal 13 verlaufende Betriebsmittelkanäle 14 verbinden den mittigen Betriebsmittelkanal 13 mit der Betätigungsvorrichtung 11. Das Gehäuseelement 12, das die Betätigungsvorrichtung 11 zumindest teilweise begrenzt, ist radial außerhalb der Abtriebswelle 17 angeordnet. Das Gehäuseelement 12 begrenzt die Betätigungsvorrichtung 11 zumindest in einer Axialrichtung und in Umfangsrichtung. Die Betätigungsvorrichtung 11 weist einen Kupplungskolben 15 auf. Der Kupplungskolben 15 ist axial verschiebbar in dem Gehäuseelement 12 gelagert. Der Kupplungskolben 15 ist insbesondere auf der Wandung 21 gelagert. Der Kupplungskolben 15 bildet zusammen mit dem Gehäuseelement 12 einen Druckraum 16 aus. Der Druckraum 16 ist dabei insbesondere von der Rückwand 20, der Wandung 21, der Abtriebswelle 17 und von Teilbereichen des Kupplungskolbens 15 begrenzt. Der Druckraum 16 ist über die Betriebsmittelkanäle 13, 14 mit einem Betriebsmittelreservoir und einer Betriebsmittelpumpe verbunden, über die der Druckraum 16 zur Betätigung der Kupplung 10 mit einem Betriebsmitteldruck beaufschlagt werden kann.

Die Betätigungsvorrichtung 11 weist ein Federelement 19 auf, das zwischen dem Kupplungskolben 15 und der Kupplung 10 angeordnet ist. Über das Federelement 19 wird eine Kraft von dem Kupplungskolben 15 auf die Kupplung 10 übertragen. Durch das Federelement 19 wird eine durch den Kupplungskolben 15 aufgebrachte Betätigungskraft auf das Lamellenpaket übertragen und die Kupplung 10 durch Zusammenpressen der ersten und zweiten Lamellen des Lamellenpakets geschlossen. Das Federelement 19 ist als ein Tellerfederpaket ausgebildet. Grundsätzlich ist es auch denkbar, dass das Federelement 19 als eine andere, dem Fachmann als sinnvoll erscheinende Feder ausgebildet ist. Das Federelement 19 ist zwischen dem Kupplungskolben 15 und der Kupplung 10 angeordnet und innerhalb eines Gehäuserings gelagert. Das als Tellerfederpaket ausgebildete Federelement 19 entspricht dabei aus dem Stand der Technik bekannten Tellerfederpaketen und soll deshalb hier nicht näher beschrieben werden.

Die hydraulische Betätigungsvorrichtung 11 ist dazu vorgesehen, in der Betätigungsstellung verriegelt zu werden, um die Kupplung 10 ohne Anliegen eines Betriebsmitteldrucks geschlossen zu halten. Durch die Verriegelung der Betätigungsvorrichtung 11 in der Betätigungsstellung kann die Kupplung 10 kraftfrei geschlossen gehalten werden. So muss ein Hydraulikdruck vorteilhaft nicht während einer gesamten Phase, in der die Kupplung 10a geschlossen ist, aufrechterhalten werden. So kann vorteilhaft Energie eingespart werden.

Zur Verriegelung der Betätigungsvorrichtung 11 in einem betätigten Zustand der Kupplung 10 weist die Kupplungsvorrichtung einen Verriegelungsmechanismus 18 auf. Der Verriegelungsmechanismus 18 ist dazu vorgesehen, den Kupplungskolben 15 in der Betätigungsstellung mechanisch zu verriegeln. Dadurch kann der Druckraum 16 der Betätigungsvorrichtung 11 nach der Verriegelung druckfrei geschaltet werden. Der Verriegelungsmechanismus 18 ist dazu vorgesehen, die Betätigungsvorrichtung 11 mechanisch zu verriegeln. Zur Verriegelung weist die Betätigungsvorrichtung 11 zwei beweglich gelagerte Halteelemente 22, 23 auf. Grundsätzlich ist es auch denkbar, dass die Betätigungsvorrichtung 11 lediglich ein oder mehr als zwei Halteelemente 22, 23 aufweist. Die Halteelemente 22, 23 sind in dem Gehäuseelement 12 angeordnet. Die Halteelemente 22, 23 sind insbesondere in einem Teil des Gehäuseelements 12 angeordnet, das von der Abtriebswelle 17 ausgebildet ist. Die Halteelemente 22, 23 sind auf gegenüberliegenden Seiten des Gehäuseelements 12 bzw. der Abtriebswelle 17 angeordnet. Die Halteelemente 22, 23 sind im Wesentlichen gleich ausgebildet, in identischer Weise an dem Gehäuseelement 12 angeordnet und weisen eine gleiche Funktion auf, weswegen im Folgenden lediglich das eine Halteelement 22 näher beschrieben wird. Eine Beschreibung des Halteelements 22 kann zur Erläuterung des zweiten Halteelements 23 herangezogen werden.

Zur Aufnahme des Halteelements 22 weist das Gehäuseelement 12 ein Aufnahmeloch 24 auf. Das Aufnahmeloch 24 ist als eine Senkbohrung ausgebildet. Das Halteelement 22 ist in dem Aufnahmeloch 24 angeordnet. Das Halteelement 22 ist komplett in dem Aufnahmeloch 24 versenkbar. Das Halteelement 22 ist beweglich in dem Aufnahmeloch 24 gelagert.

Das Halteelement 22 ist, bezogen auf eine Drehachse der Abtriebswelle 17, im Wesentlichen in radialer Richtung verschiebbar an dem Gehäuseelement 12 gelagert. Es ist in dem Aufnahmeloch 24 verschiebbar gelagert.

Das Halteelement 22 ist zwischen zwei Stellungen verschiebbar. Die erste Stellung des Halteelements 22 ist als eine Verstaustellung ausgebildet. In der Verstaustellung ist das Halteelement 22 komplett in dem Aufnahmeloch 24 angeordnet. Die zweite Stellung des Halteelements 22 ist als eine Verriegelstellung ausgebildet. In der Verriegelstellung ist das Halteelement 22 zumindest teilweise aus dem Aufnahmeloch 24 herausbewegt. In der Verriegelstellung ragt das Halteelement 22 zumindest teilweise in einen Bereich zwischen das Gehäuseelement 12 und den Kupplungskolben 15. In der Verriegelstellung koppelt das Halteelement 22 den Kupplungskolben 15 direkt mit dem Gehäuseelement 12. Das Halteelement 22 ist federbelastet in dem Aufnahmeloch 24 gelagert. Der Verriegelungsmechanismus 18 umfasst ein Federelement 26, das eine Federkraft auf das Halteelement 22 ausübt. Das Federelement 26 ist funktionell zwischen dem Gehäuseelement 12 und dem Halteelement 22 angeordnet. Das Federelement 26 ist in dem Aufnahmeloch 24 unterhalb des Halteelements 22 angeordnet. Das Federelement 26 übt eine Federkraft auf das Halteelement 22 aus, die das Halteelement 22 in Richtung seiner Verriegelstellung drückt. Das Halteelement 22 wird gegen die Federkraft des Federelements 26 in seine Verstaustellung gedrückt. Das Federelement 26 ist als eine Spiralfeder ausgebildet. Grundsätzlich ist es auch denkbar, dass das Federelement 26 als eine andere, dem Fachmann als sinnvoll erscheinende Feder ausgebildet ist.

Der Verriegelungsmechanismus 18 umfasst ein Verriegelungselement 27. Das Verriegelungselement 27 ist dazu vorgesehen, die Halteelemente 22, 23 in ihrer Verstaustellung zu verriegeln oder freizugeben, sodass die Halteelemente 22, 23 in ihre Verriegelstellung verfahren werden können. Das Verriegelungselement 27 ist drehbar zu dem Gehäuseelement 12 gelagert. Das Verriegelungselement 27 ist dabei zwischen zwei Verriegelstellungen und einer Freigabestellung zu dem Gehäuseelement 12 verdrehbar. Dabei ist die Freigabestellung des Verriegelungselements 27 als eine Stellung zwischen den beiden Verriegelstellungen ausgebildet. Dadurch kann vorteilhaft erreicht werden, dass das Verriegelungselement 27 von der Freigabestellung bei einer Betätigung immer prozesssicher in eine Verriegelstellung gebracht werden kann. Grundsätzlich wäre es auch denkbar, dass das Verriegelungselement 27 lediglich zwischen einer Verriegelstellung und einer Freigabestellung verdrehbar ist. In der Verriegelstellung verriegelt das Verriegelungselement 27 die Halteelemente 22, 23 in ihrer Verstaustellung. In der Freigabestellung gibt das Verriegelungselement 27 eine Bewegung der Halteelemente 22, 23 in ihrer Verriegelstellung frei und diese werden über ihre Federelemente 26 in ihre Verriegelstellung gedrückt. Das Verriegelungselement 27 ist auf dem Teil des Gehäuseelements 12 gelagert, das von der Abtriebswelle 17 gebildet ist. Das Verriegelungselement 27 ist als eine Stellhülse ausgebildet. Das Verriegelungselement 27 umgibt den Teil des Gehäuseelements 12, der von der Abtriebswelle 17 ausgebildet ist. Das Verriegelungselement 27 ist in dem Druckraum 16 angeordnet. Das Verriegelungselement 27 ist zwischen dem Gehäuseelement 12 und dem Kupplungskolben 15 angeordnet.

Das Verriegelungselement 27 greift in einem montierten Zustand teilweise in den Kupplungskolben 15 ein. Dazu bildet der Kupplungskolben 15 in seinem unteren Bereich 29 eine U-Form aus. Die U-Form des unteren Bereichs 29 ist dabei von einer inneren Wandung 28 und einer Mittelwandung 30 gebildet. Das Verriegelungselement 27 ist in Radialrichtung zumindest teilweise zwischen der inneren Wandung 28 und der Mittelwandung 30 angeordnet. Die innere Wandung 28 des Kupplungskolbens 15 liegt auf dem Teil des Gehäuseelements 12 auf, das von der Abtriebswelle 17 gebildet ist. Die innere Wandung 28 des Kupplungskolbens 15 ist teilweise zwischen dem Gehäuseelement 12 und dem Verriegelungselement 27 angeordnet. Mit einem vorderen Bereich ist das Verriegelungselement 27 auf der inneren Wandung 28 des Kupplungskolbens 15 gelagert.

Sowohl die innere Wandung 28 als auch die Mittelwandung 30 sind im Wesentlichen parallel zu einer Drehachse einer Welle des Kraftfahrzeuggetriebes angeordnet. Sie sind hier parallel zu einer Drehachse der Abtriebswelle 17 angeordnet.

Das Verriegelungselement 27 weist an seinem Innenumfang 31 je Halteelement 22, 23 jeweils zwei Sperrbereiche 32, 33 und einen Freigabebereich 34 auf. Die Sperrbereiche 32, 33 und der Freigabebereich 34 sind in Umfangsrichtung benachbart an dem Innenumfang 31 angeordnet. Der Freigabebereich 34 ist zwischen den beiden Sperrbereichen 32, 33 angeordnet. In dem Freigabebereich 34 weist das Verriegelungselement 27 einen Innenradius auf, der größer ist als in den Sperrbereichen 32 33. In den Sperrbereichen 32, 33 erstreckt sich das Verriegelungselement 27 radial weiter nach innen. Die Sperrbereiche 32, 33 sind als tangential verlaufende, sich von dem Innenradius nach innen erstreckende Wandungen ausgebildet. In dem Freigabebereich 34 weist der Innenumfang 31 einen Radius auf, der so groß ist, dass in einem montierten Zustand das entsprechende Halteelement 22, 23 aus seinem Aufnahmeloch 24 herausragen und den Kupplungskolben 15 verriegeln kann, wenn der Freigabebereich 34 deckungsgleich mit dem Halteelement 22, 23 angeordnet ist. In der Freigabestellung des Verriegelungselements 27 ist der Freigabebereich 34 mit dem entsprechenden Halteelement 22, 23 deckungsgleich. Ist einer der Sperrbereiche 32, 33 deckungsgleich mit dem entsprechenden Halteelement 22, 23 angeordnet, drückt das Verriegelungselement 27 das entsprechende Halteelement 22, 23 in sein Aufnahmeloch 24 und dadurch in seine Verstaustellung. In den Verriegelstellungen des Verriegelungselements 27 ist einer der Sperrbereiche 32, 33 deckungsgleich mit dem entsprechenden Halteelement 22, 23 und drückt dieses in seine Verstauposition.
Das Verriegelungselement 27 ist mit dem Kupplungskolben 15 gekoppelt. Zur Erzeugung einer Drehbewegung des Verriegelungselements 27 zur Verstellung des Verriegelungselements 27 zwischen den Verriegelstellungen und der Freigabestellung weist der Verriegelungsmechanismus 18 eine Kulissenführung 25 auf. Über die Kulissenführung 25 ist das Verriegelungselement 27 zu dem Kupplungskolben 15 geführt. Die Kulissenführung 25 ist dazu vorgesehen, eine axiale Relativbewegung des Verriegelungselements 27 zu dem Kupplungskolben 15 in eine Rotationsbewegung des Verriegelungselements 27 zu dem Kupplungskolben 15 und dem Gehäuseelement 12 umzusetzen. Die Kulissenführung 25 weist eine Führungsnut 35 auf. Die Führungsnut 35 ist von dem Verriegelungselement 27 ausgebildet. Die Führungsnut 35 ist an einem Außenumfang des Verriegelungselements 27 angeordnet. Die Führungsnut 35 bildet eine zumindest im Wesentlichen W-förmige Führungsbahn aus. Die Führungsnut 35 bildet zwei Endbereiche 36, 37 aus. Die Endbereiche 36, 37 geben die beiden Verriegelstellungen des Verriegelungselements 27 wieder. Die Führungsnut 35 bildet einen Mittelbereich 38 aus. Der Mittelbereich 38 gibt die Freigabestellung des Verriegelungselements 27 wieder. Die Kulissenführung 25 weist einen Führungspin 39 auf. Der Führungspin 39 ist ortsfest mit dem Kupplungskolben 15 verbunden. Der Kupplungskolben 15 weist in seiner Mittelwandung 30 ein Durchgangsloch 40 auf. Das Durchgangsloch 40 weist dabei eine Senkung auf, wodurch der Führungspin 39 mittels seines Kopfs in dem Durchgangsloch 40 fixiert ist. Mit einem unteren Ende ragt der Führungspin 39 in einem montierten Zustand in einen Bereich zwischen der Mittelwandung 30 und der unteren Wandung 28 des Kupplungskolbens 15. In einem montierten Zustand greift der Führungspin 39 in die Führungsnut 35 der Kulissenführung 25 ein. Durch eine axiale Relativbewegung des Verriegelungselements 27 zu dem Kupplungskolben 15 wird die Führungsnut 35 gegen den Führungspin 39 gedrückt und verdreht das Verriegelungselement 27 bei einer weiteren axialen Relativbewegung dadurch, dass die Führungsnut 35 an dem Führungspin 39 entlang gleitet.

Der Verriegelungsmechanismus 18 weist ein Federelement 41 auf, das dazu vorgesehen ist, eine Federkraft auf das Verriegelungselement 27 auszuüben. Das Federelement 41 ist funktionell zwischen dem Kupplungskolben 15 und dem Verriegelungselement 27 angeordnet. Das Federelement 41 ist in dem unteren, U-förmigen Bereich 29 des Kupplungskolbens 15 angeordnet. Das Federelement 41 ist zwischen der unteren Wandung 28 und der Mittelwandung 30 des Kupplungskolbens 15 angeordnet. Das Federelement 41 ist als eine Tellerfeder ausgebildet. Das Federelement 41 ist über einen Sprengring 42, der mit der Mittelwandung 30 gekoppelt ist, an dem Kupplungskolben 15 befestigt. Das Federelement 41 übt eine Kraft auf das Verriegelungselement 27 aus, die das Verriegelungselement 27 in Richtung seiner Verriegelstellung drückt.

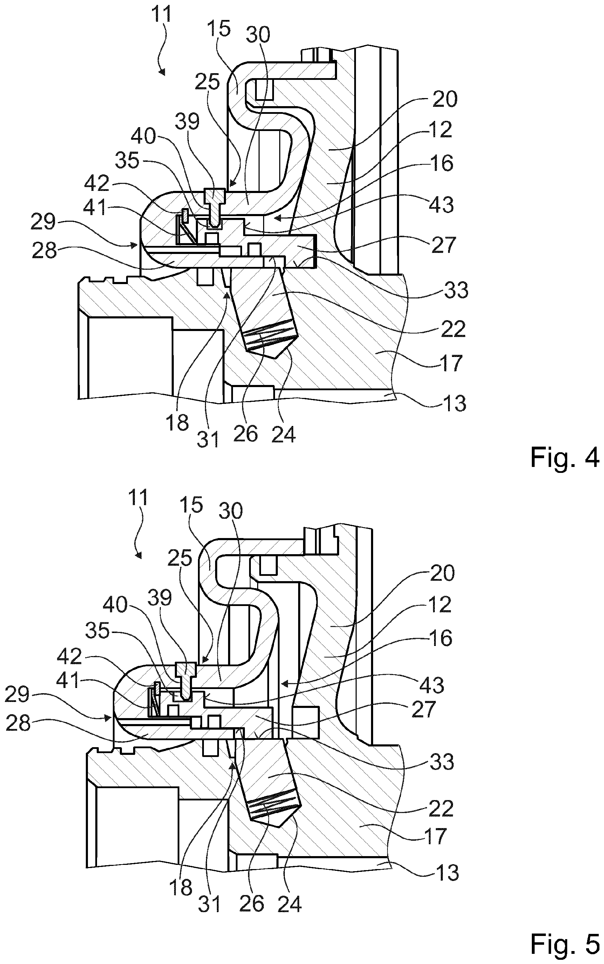

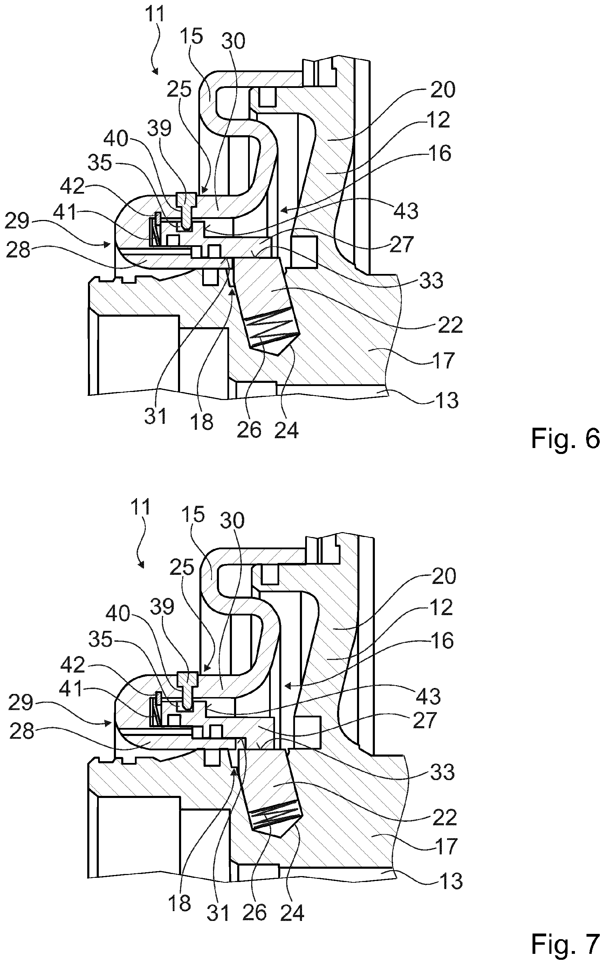

Das Verriegelungselement 27 ist in dem Druckraum 16 der Betätigungsvorrichtung 11 angeordnet. Das Verriegelungselement 27 weist eine Druckangriffsfläche 43 auf. Die Druckangriffsfläche 43 ist in dem Druckraum 16 angeordnet. Die Druckangriffsfläche 43 steht einer Fläche des Verriegelungselements 27, an dem das Federelement 41 angreift, gegenüber. Wird der Druckraum 16 zur Betätigung der Kupplung 10 mit einem Betriebsmittel gefüllt und dadurch mit einem Betriebsmitteldruck beaufschlagt, wird über die Druckangriffsfläche 43 eine axiale Kraft auf das Verriegelungselement 27 ausgeübt, die der Federkraft des Federelements 41 entgegen gerichtet ist. Die Kraft, die über die Druckangriffsfläche 43 auf das Verriegelungselement 27 wirkt, ist dazu vorgesehen, das Verriegelungselement 27 zur Verdrehung axial zu dem Kupplungskolben 15 zu bewegen. In der Ruhestellung der Betätigungsvorrichtung 11 ist der Kupplungskolben 15 maximal in Richtung des Gehäuseelementes 12 gedrückt und das Verriegelungselement 27 ist durch das Federelement 41 in eine Verriegelstellung gedrückt. Der Druckraum 16 ist in der Ruhestellung druckfrei. Je nachdem in welcher der beiden Verriegelstellungen das Verriegelungselement 27 angeordnet ist, ist der Führungspin 39 in dem entsprechenden Endbereich 36, 37 der Führungsnut 35 angeordnet. Die Halteelemente 22, 23 sind von der unteren Wandung 28 des Kupplungskolbens 15 in ihre Verstaustellung gedrückt. Die Ruhestellung ist in den Figuren 1 und 4 dargestellt. Wird der Druckraum 16 mit einem Betriebsmittel gefüllt und dadurch mit einem Betriebsmitteldruck beaufschlagt, bewegt sich der Kupplungskolben 15 in dem Gehäuseelement 12 sukzessive in Richtung der Kupplung 10 und drückt die Lamellen dadurch langsam zusammen, um die Kupplung 10 zu schließen. Bei Erreichen eines Betätigungsbetriebsmitteldrucks in dem Druckraum 16 ist die Kupplung 10 komplett geschlossen. Die Halteelemente 22, 23 des Verriegelungsmechanismus 18 sind dazu vorgesehen, durch den Betätigungsbetriebsmitteldruck in dem Druckraum 16 in ihre Verriegelstellung gebracht zu werden. Wird der Betriebsmitteldruck in dem Druckraum 16 der Betätigungsvorrichtung 11 sukzessive auf den Betätigungsbetriebsmitteldruck gesteigert verschiebt sich der Kupplungskolben 15 zunächst zusammen mit dem Verriegelungselement 27 in Richtung der Kupplung 10. Durch die axiale Verschiebung des Kupplungskolbens 15 und des Verriegelungselements 27 kommt einer der Sperrbereiche 32, 33 mit dem entsprechenden Halteelement 22, 23 in Kontakt und fixiert dieses in seiner Verstaustellung in dem Aufnahmeloch 24. Der Kupplungskolben 15 wird so weit in Richtung der Kupplung 10 verschoben, dass die untere Wandung 28 des Kupplungskolbens 15 die Halteelemente 22, 23 nicht mehr fixiert und diese nur noch mittels des Verriegelungselements 27 in ihrer Verstaustellung gehalten werden. Ab einem definierten Betriebsmitteldruck, der geringer ist als der Betätigungsbetriebsmitteldruck, ist eine Kraft, die durch die Druckangriffsfläche 43 auf das Verriegelungselement 27 wirkt, größer als die Federkraft des Federelements 41. Durch die resultierende Kraft aus der Federkraft und der Druckkraft verschiebt sich das Verriegelungselement 27 in Richtung der Kupplung 10 zu dem Kupplungskolben 15. In der Kulissenführung 25 wird die Führungsnut 35 entlang des in dem Kupplungskolben 15 festen Führungspins 39 verschoben. Durch die Form der Führungsnut 35 wird das Verriegelungselement 27 zu dem Kupplungskolben 15 und dem Gehäuseelement 12 verdreht. Bei Erreichen des Betätigungsbetriebsmitteldrucks ist das Verriegelungselement 27 von seiner Verriegelstellung in seine Freigabestellung verdreht worden. Dabei ist der Führungspin 39 in dem Mittelbereich 38 der Führungsnut 35 angeordnet. Die Freigabebereiche 34 des Verriegelungselements 27 sind in Deckung mit dem entsprechenden Halteelement 22, 23 angeordnet. Dadurch werden die Halteelemente 22, 23 durch ihre Federelemente 26 in ihre Verriegelstellung gedrückt. Die Halteelemente 22, 23 schieben sich radial nach außen, in Axialrichtung gesehen hinter die untere Wandung 28 des Kupplungskolbens 15 (siehe Figur 6). Der Kupplungskolben 15 ist über die Halteelemente 22, 23 direkt formschlüssig mit dem Gehäuseelement 12 gekoppelt. Der Kupplungskolben 15 ist dadurch mechanisch verriegelt. Der Druckraum 16 kann nun druckfrei geschaltet werden und die Kupplung 10 bleibt durch den mechanisch verriegelten Kupplungskolben 15 weiter geschlossen. Bei Senken des Betriebsmitteldrucks in dem Druckraum 16 unter den Betätigungsbetriebsmitteldruck wird die Kraft, die über die Druckangriffsfläche 43 auf das Verriegelungselement 27 ausgeübt wird, kleiner als die Federkraft des Federelements 41. Das Federelement 41 drückt das Verriegelungselement 27 von der Kupplung 10 weg. Dadurch wird der Führungspin 39 der Kulissenführung 25 in den Mittelbereich 38 der Führungsnut 35 gedrückt. Dadurch wird das Verriegelungselement 27 durch das Federelement 41 und die Kulissenführung 25 in der Verriegelstellung fixiert. Die Freigabebereiche 34 bleiben dadurch in Deckung mit den entsprechenden Halteelementen 22, 23 und diese können den Kupplungskolben 15 in Axialrichtung weiter verriegeln.

Die Halteelemente 22, 23 sind dazu vorgesehen, bei einer erneuten Beaufschlagung des Druckraums 16 mit dem Betätigungsbetriebsmitteldruck wieder aus ihrer Verriegelstellung gebracht zu werden. Dadurch kann der Verriegelungsmechanismus 18 selbsttätig lediglich durch Beaufschlagung des Druckraums 16 mit dem Betätigungsbetriebsmitteldruck zwischen der Verriegelstellung und einer Freigabestellung umgeschaltet werden. Durch Beaufschlagung des Druckraums 16 mit dem Betätigungsbetriebsmitteldruck wird der Kupplungskolben 15 durch die Kraft auf die Druckangriffsfläche 43 gegen die Federkraft des Federelements 41 relativ zu dem Kupplungskolben 15 in Richtung der Kupplung 10 verschoben. Dadurch fährt der Führungspin 39 aus dem Mittelbereich 38 entlang der Führungsnut 35 in einen der beiden Endbereiche 36, 37. Durch die W-förmige Ausgestaltung der Führungsnut 35 und die daraus resultierende Möglichkeit des Führungspins 39, sich sowohl in Richtung des einen Endbereichs 36 als auch in Richtung des anderen Endbereichs 37 zu bewegen, kann ein Verkanten des Führungspins 39 in der Führungsnut 35 vorteilhaft verhindert werden und so eine betriebssichere Schaltung des Verriegelungselements 27 aus seiner Freigabestellung in eine Verriegelstellung garantiert werden. Durch die Führung des Verriegelungselements 27 mittels der Kulissenführung 25 verdreht sich das Verriegelungselement 27 zurück in seine Verriegelstellung und ein entsprechender Sperrbereich 32, 33 (abhängig von einer Drehrichtung des Verriegelungselements 27) drückt das entsprechende Halteelement 22, 23 gegen die Federkraft des entsprechenden Federelements 26 in das entsprechende Aufnahmeloch 24 in seine Verstaustellung. Durch die Federkraft des Federelements 41 wird das Verriegelungselement 27 über die Kulissenführung 25 wieder in seine Verriegelstellung gedreht, sobald der Betriebsmitteldruck in dem Druckraum 16 wieder unter den Betätigungsbetriebsmitteldruck sinkt. Wird der Betriebsmitteldruck in dem Druckraum 16 weiter gesenkt und der Druckraum 16 sukzessive druckfrei geschaltet, wird der Kupplungskolben 15 und das Verriegelungselement 27 wieder in Richtung der Ruhestellung bewegt. Dabei überfährt die untere Wandung 28 des Kupplungskolbens 15 zunächst die Halteelemente 22, 23 und fixiert diese in ihrer Verstaustellung in dem entsprechenden Aufnahmeloch 24. Bei einer weiteren Verschiebung wird das Verriegelungselement 27 mit seinen Sperrbereichen 32, 33 von den Halteelementen 22, 23 weg bewegt und nur noch der Kupplungskolben 15 fixiert die Halteelemente 22, 23 in ihrer Verstaustellung. Ist der Druckraum 16 wieder druckfrei, ist die Betätigungsvorrichtung 11 wieder in ihrer Ruhestellung und die Kupplung 10 ist komplett geöffnet.

### Bezugszeichenliste

- 10: Kupplung
- 11: Betätigungsvorrichtung
- 12: Gehäuseelement
- 13: Betriebsmittelkanal
- 14: Betriebsmittelkanal
- 15: Kupplungskolben
- 16: Druckraum
- 17: Abtriebswelle
- 18: Verriegelungsmechanismus
- 19: Federelement
- 20: Rückwand
- 21: Wandung
- 22: Halteelement
- 23: Halteelement
- 24: Aufnahmeloch
- 25: Kulissenführung
- 26: Federelement
- 27: Verriegelungselement
- 28: Wandung
- 29: unterer Bereich
- 30: Mittelwandung
- 31: Innenumgang
- 32: Sperrbereich
- 33: Sperrbereich
- 34: Freigabebereich
- 35: Führungsnut
- 36: Endbereich
- 37: Endbereich
- 38: Mittelbereich
- 39: Führungspin
- 40: Durchgangsloch
- 41: Federelement
- 42: Sprengring
- 43: Druckangriffsfläche

## Patentansprüche

1. Kupplungsvorrichtung zur Betätigung einer Kupplung (10) eines Kraftfahrzeuggetriebes, mit einer hydraulischen Betätigungsvorrichtung (11), die zur Kupplungsbetätigung vorgesehen ist und dazu zumindest ein verdrehfest und axial fest mit einer Welle (17) verbundenes Gehäuseelement (12) und einen Kupplungskolben (15) aufweist, der zwischen einer Ruhestellung und einer Betätigungsstellung verschiebbar an dem Gehäuseelement (12) gelagert ist, wobei zwischen dem Gehäuseelement (12) und dem Kupplungskolben (15) ein Druckraum (16) angeordnet ist, durch dessen Beaufschlagung mit einem Betätigungsbetriebsmitteldruck der Kupplungskolben (15) zumindest von der Ruhestellung in die Betätigungsstellung verfahren werden kann, und mit einem Verriegelungsmechanismus (18), der den Kupplungskolben (15) in der Betätigungsstellung mechanisch verriegelt und dazu wenigstens ein beweglich gelagertes Halteelement (22, 23) aufweist, das dazu vorgesehen ist, durch einen Betätigungsbetriebsmitteldruck in eine Verriegelstellung gebracht zu werden, wobei der Verriegelungsmechanismus (18) ein sowohl zu dem Gehäuseelement (12) als auch zu dem Kupplungskolben (15) axial verschiebbar gelagertes Verriegelungselement (27) aufweist, das dazu vorgesehen ist, das Halteelement (22, 23) zumindest in einem teilweise geöffneten Zustand der Kupplung (10) zu deaktivieren,
**dadurch gekennzeichnet, dass**
das Verriegelungselement (27) zu dem Gehäuseelement (12) und/oder dem Kupplungskolben (15) drehbar gelagert ist.

2. Kupplungsvorrichtung nach Anspruch 1,
**dadurch gekennzeichnet, dass**
das Verriegelungselement (27) als eine Hülse ausgebildet ist und an einem Innenumfang (31) in Umfangsrichtung benachbart angeordnete Sperrbereiche (32, 33) und Freigabebereiche (34) aufweist.

3. Kupplungsvorrichtung nach einem der vorhergehenden Ansprüche,
**dadurch gekennzeichnet, dass**
das Verriegelungselement (27) über eine Kulissenführung (25) geführt ist, die dazu vorgesehen ist, eine axiale Bewegung des Verriegelungselements (27) in eine Rotation des Verriegelungselements (27) umzusetzen.

4. Kupplungsvorrichtung nach Anspruch 3,
**dadurch gekennzeichnet, dass**
die Kulissenführung (25) zumindest eine Führungsnut (35) aufweist, die an einem Außenumfang des Verriegelungselementes (27) angeordnet ist.

5. Kupplungsvorrichtung nach Anspruch 4,
**dadurch gekennzeichnet, dass**
die Führungsnut (35) eine W-Form aufweist.

6. Kupplungsvorrichtung zumindest nach Anspruch 4 und 5,
**dadurch gekennzeichnet, dass**
die Kulissenführung (25) wenigstens einen in die Führungsnut (35) eingreifenden Führungspin (39) aufweist, der ortsfest in dem Kupplungskolben (15) gelagert ist.

7. Kupplungsvorrichtung nach einem der vorhergehenden Ansprüche,
**dadurch gekennzeichnet, dass**
der Kupplungskolben (15) bereichsweise eine U-Form ausbildet, wobei die U-Form eine innere Wandung (28) und eine Mittelwandung (30) aufweist, wobei das Verriegelungselement (27) in Radialrichtung zumindest teilweise zwischen der inneren Wandung (28) und der Mittelwandung (30) angeordnet ist.

8. Kupplungsvorrichtung nach einem der vorhergehenden Ansprüche,
**gekennzeichnet durch**
ein Federelement (41), das zwischen dem Kupplungskolben (15) und dem Verriegelungselement (27) angeordnet ist.

9. Kupplungsvorrichtung nach einem der vorhergehenden Ansprüche,
**dadurch gekennzeichnet, dass**
das Halteelement (22, 23) an dem Gehäuseelement (12) im Wesentlichen axial fest und radial verschiebbar gelagert ist.

## Claims

1. Clutch device for actuating a clutch (10) of a motor vehicle gearbox, with a hydraulic actuating device (11), which is provided for clutch actuation and for this purpose has at least one housing element (12) connected non-rotatably and axially fixed to a shaft (17) and a clutch piston (15) mounted at the housing element (12) while being capable of moving between an inoperative position and an actuating position, wherein between the housing element (12) and the clutch piston (15) there is located a pressure chamber (16), by the application of an actuation fluid pressure to which pressure chamber (16) the clutch piston (15) can be moved at least from the inoperative position into the actuating position, and with a locking mechanism (18), which mechanically locks the clutch piston (15) in the actuating position and for this purpose has at least one movably mounted holding element (22, 23) provided for being moved into a locking position by an actuation fluid pressure, wherein the locking mechanism (18) has a locking element (27), which is mounted for axial displacement both with respect to the housing element (12) and with respect to the clutch piston (15) and which is provided to deactivate the holding element (22, 23) at least in a partially opened state of the clutch (10),
**characterised in that**
the locking element (27) is mounted rotatably with respect to the housing element (12) and/or to the clutch piston (15).

2. Clutch device according to claim 1,
**characterised in that**
the locking element (27) is designed as a sleeve and has locking regions (32, 33) and releasing regions (34) arranged adjacent to one another in the circumferential direction at an inner circumference (31).

3. Clutch device according to any of the preceding claims,
**characterised in that**
the locking element (27) is guided by way of a link guide (25) provided to convert an axial movement of the locking element (27) into a rotation of the locking element (27).

4. Clutch device according to claim 3,
**characterised in that**
the link guide (25) has at least one guide groove (35) located at an outer circumference of the locking element (27).

5. Clutch device according to claim 4,
**characterised in that**
the guide groove (35) has a W-shape.

6. Clutch device according to at least claims 4 and 5,
**characterised in that**
the link guide (25) has at least one guide pin (39), which engages with the guide groove (35) and is mounted in the clutch piston (15) in a stationary manner.

7. Clutch device according to any of the preceding claims,
**characterised in that**
the clutch piston (15) forms a U-shape in certain areas, the U-shape having an inner wall (28) and a central wall (30), the locking element (27) being located in the radial direction at least partially between the inner wall (28) and the central wall (30).

8. Clutch device according to any of the preceding claims,
**characterised by**
a spring element (41) located between the clutch piston (15) and the locking element (27).

9. Clutch device according to any of the preceding claims,
**characterised in that**
the holding element (22, 23) is mounted at the housing element (12) in a substantially axially fixed and radially displaceable manner.

## Revendications

1. Dispositif d'accouplement pour actionner un accouplement (10) d'une transmission de véhicule à moteur, comprenant un dispositif d'actionnement hydraulique (11), qui sert à actionner l'accouplement, et présente ainsi au moins un élément de boîtier (12) accouplé solidaire en rotation et axialement à un arbre (17) et un piston d'accouplement (15), qui est monté en coulissement entre une position de repos et une position d'actionnement sur l'élément de boîtier (12), entre l'élément de boîtier (12) et le piston d'accouplement (15) est ménagé un espace de pression (16) alimentant en pression moyenne d'actionnement le piston d'accouplement qui peut ainsi se déplacer au moins d'une position de repos à la position d'actionnement, et comprenant un mécanisme de verrouillage (18) qui verrouille dans la position d'actionnement le piston d'accouplement (15) et pour cela présente au moins un élément de retenue (22, 23) monté amovible, qui est ainsi amené par une pression moyenne d'actionnement dans une position de verrouillage, le mécanisme de verrouillage (18) présentant un élément de verrouillage (27) monté en coulissement axial tant par rapport à l'élément de boîtier (12) que par rapport au piston d'accouplement (15), ledit élément de verrouillage (27) servant à désactiver l'élément de retenue (22, 23) au moins dans un état partiellement ouvert de l'accouplement (10), **caractérisé en ce que** l'élément de verrouillage (27) est monté en rotation par rapport à l'élément de boîtier (12) et/ou par rapport au piston d'accouplement (15).

2. Dispositif d'accouplement selon la revendication 1, **caractérisé en ce que** l'élément de verrouillage (27) est conçu sous la forme d'un manchon et présente sur une circonférence intérieure (31) des zones de blocage (32, 33) et des zones de libération (34) adjacentes dans le sens de la circonférence.

3. Dispositif d'accouplement selon l'une quelconque revendication précédente, **caractérisé en ce que** l'élément de verrouillage (27) est guidé sur un guide à coulisse (25) qui sert à convertir un mouvement axial de l'élément de verrouillage (27) en une rotation de l'élément de verrouillage (27).

4. Dispositif d'accouplement selon la revendication 3, **caractérisé en ce que** le guide à coulisse (25) présente au moins une rainure de guidage (35) qui est ménagée sur une circonférence extérieure de l'élément de verrouillage (27).

5. Dispositif d'accouplement selon la revendication 4, **caractérisé en ce que** la rainure de guidage (35) est conçue en W.

6. Dispositif d'accouplement selon la revendication 4 ou la revendication 5, **caractérisé en ce que** le guidage à coulisse (25) présente au moins une tige de guidage (39) s'insérant dans la rainure de guidage (35) qui est montée à demeure dans le piston d'accouplement (15).

7. Dispositif d'accouplement selon l'une quelconque revendication précédente, **caractérisé en ce que** le piston d'accouplement (15) forme à certains endroits une forme en U, la forme en U présentant une paroi intérieure (28) et une paroi intermédiaire (30), l'élément de verrouillage (27) étant disposé dans le sens radial au moins à certains endroits entre la paroi intérieure (28) et la paroi intermédiaire (30).

8. Dispositif d'accouplement selon l'une quelconque revendication précédente, **caractérisé par** un élément ressort (41) qui est disposé entre le piston d'accouplement (15) et l'élément de verrouillage (27).

9. Dispositif d'accouplement selon l'une quelconque revendication précédente, **caractérisé en ce que** l'élément de retenue (22, 23) est monté en coulissement radial et radialement à demeure sensiblement sur l'élément de boîtier (12).
